# EUROPEAN PATENT APPLICATION

(11) **EP 3 432 164 A1**
(43) Date of publication of application: **23.01.2019**
(21) Application number: 18183821.0
(22) Date of filing: 17.07.2018
(51) Int. Cl.: G06F 17/30

(54) **METHOD AND APPARATUS FOR PROCESSING BOOKMARK AND STORAGE MEDIUM**

(30) Priority: 19.07.2017 CN 201710592795
(71) Applicant: Beijing Xiaomi Mobile Software Co., Ltd., Beijing 100085 (CN)
(72) Inventor: ZHANG, Xiangyang, Beijing, 100085 (CN)
(74) Representative: Kudlek, Franz Thomas

(57) **Abstract**

The present disclosure discloses a method and an apparatus for processing bookmarks and a terminal device. The method including: obtaining (S101) bookmarks from a plurality of applications; generating (S102) bookmark index with respect to respective application according to the bookmarks; when a collection checking operation is detected, displaying (S103) the bookmark indexes; and when a checking operation of a bookmark index is detected, displaying (SI04) a corresponding bookmark.

## Description

### TECHNICAL FIELD

The present disclosure generally relates to a technical field of intelligent terminal device, and more particularly, to a method and an apparatus for processing bookmark and a non-transitory storage medium.

### BACKGROUND

A user may often read through using applications installed on a terminal device, such as a mobile phone. For example, the user may read electronic articles through applications installed on the mobile phone, such as WeChat®, Twitter® and News client. When the user is interested in an electronic article or does not have enough time to finish the electronic article, the user can collect the electronic article through a collection function provided by the current application for later reading.

However, when there are many applications installed on the mobile phone, the user may collect different electronic articles through different applications. This may lead to a situation that the user cannot remember the application for opening the collected article or even need to launch the applications one by one to find a certain collected electronic article.

### SUMMARY

The present disclosure provides a method, an apparatus for processing bookmark and a terminal device, which may help a user to find a bookmarked electronic article even if the user doesn't remember the application in which the bookmarked electronic article is distributed.

According to a first aspect of the present invention, there is provided a method for processing bookmarks, including:
obtaining bookmarks from a plurality of applications;
generating bookmark index with respect to respective application according to the bookmarks;
when a collection checking operation is detected, displaying the bookmark indexes; and
when a checking operation of a bookmark index is detected, displaying the bookmark corresponding to the bookmark index.

The technical solutions provided in embodiments of the present disclosure have advantageous effects as follows. By obtaining bookmarks from a plurality of applications, generating bookmark index with respect to respective application according to the bookmarks and displaying a corresponding bookmark when a checking operation of a bookmark index is detected, link information corresponding to electronic articles from different applications can be stored uniformly, such that the user may search for the link information corresponding to electronic articles which the user is interested in from a same storage space. In this way, the user may find a bookmarked electronic article even if he/she cannot remember the application in which the bookmarked electronic article is located, thus improving the user experience.

In a first possible implementation of the first aspect of embodiments of the present disclosure, obtaining bookmarks from the plurality of applications includes: detecting an image-obtaining operation with respect to respective application; and in responding to detection of the image-obtaining operation, generating image information indicated by the image-obtaining operation; in which at least one of the bookmarks includes the image information.

In a second possible implementation of the first aspect, generating bookmark index with respect to respective application according to the bookmarks includes: obtaining text information corresponding to the image information by performing image recognition on the image information; and obtaining link information corresponding to the text information; in which the bookmark index includes the link information.

In a third possible implementation of the first aspect, the image-obtaining operation includes a screen-shot operation or a print-screen operation.

This technical solution has advantageous effects as follows. The user only needs to take a screenshot of a part of the electronic article where he/she is interested in, the terminal device may then recognize text information from the screenshot, search for a target article including the text information through a search engine by using the text information as a search keyword, and further obtain link information of the target article from the search engine. Therefore, link information corresponding to target articles from different applications may be saved in a same storage space by the user via simple operations.

In a fourth possible implementation of the first aspect, in responding to detection of the image-obtaining operation, generating image information indicated by the image-obtaining operation includes: in responding to the detection the image-obtaining operation, detecting a collecting operation with respect to respective application; and in responding to detection of the collecting operation, generating the image information.

In a fifth possible implementation of the first aspect, obtaining link information corresponding to the text information includes: obtaining a search keyword of the text information; searching for a target article corresponding to the search keyword according to the search keyword; and obtaining link information corresponding to the target article.

This technical solution has advantageous effects as follows. The user only needs to take a screenshot of a part of the electronic article where he/she is interested in, the terminal device may then recognize text information from the screenshot, search for a target article including the text information through a search engine by using the text information as a search keyword, and further obtain link information of the target article from the search engine. Therefore, link information corresponding to target articles from different applications may be saved in a same storage space by the user via simple operations.

According to possible implementations of the first aspect of embodiments of the present disclosure, in a sixth possible implementation of the first aspect, the bookmark index includes at least one first-level index item, each first-level index item indicates a distinct category; and the at least one first-level index item includes at least one second-level index item indicating a corresponding category.

This technical solution has advantageous effects as follows. By classifying the target articles, when the user looks over one of the collected electronic articles, link information corresponding to the electronic article may be searched out quickly according to a category of the electronic article, thus improving the speed and convenience of searching for an electronic article.

According to a second aspect of the present invention, there is provided an apparatus for processing bookmarks, including: an obtaining module, configured to obtain bookmarks from a plurality of applications; a generating module, configured to generate bookmark index with respect to respective application according to the bookmarks; a displaying module, configured to, when a collection checking operation is detected, display the bookmark indexes; and when a checking operation of a bookmark index is detected, display the bookmark corresponding to the bookmark index.

This technical solution has advantageous effects as follows. By obtaining bookmarks with respect to respective application, generating bookmark index with respect to respective application according to the bookmarks and displaying corresponding bookmarks when a checking operation of a piece of bookmark index is detected, link information corresponding to electronic articles from different applications can be stored uniformly, such that the user may search for the link information corresponding to electronic articles of different applications which the user is interested in from a same storage space. In this way, the user may find a collected electronic article even if he/she cannot remember the application in which the collected electronic article is located, thus improving the user experience.

In a first possible implementation of the second aspect of embodiments of the present disclosure, the obtaining module includes: a detecting unit, configured to detect an image-obtaining operation with respect to respective application; and a generating unit, configured to, in responding to detection of the image-obtaining operation, generate image information indicated by the image-obtaining operation; in which at least one of the bookmarks includes the image information.

In a second possible implementation of the second aspect, the generating module includes: a first obtaining unit, configured to obtain text information corresponding to the image information by performing image recognition on the image information; and a second obtaining unit, configured to obtain link information corresponding to the text information; in which the bookmark index includes the link information.

In a third possible implementation of the second aspect, the image-obtaining operation includes a screen-shot operation or a print-screen operation.

This technical solution has advantageous effects as follows. The user only needs to take a screenshot of a part of the electronic article where he/she is interested in, the terminal device may then recognize text information from the screenshot, search for a target article including the text information through a search engine by using the text information as a search keyword, and further obtain link information of the target article from the search engine. Therefore, link information corresponding to target articles from different applications may be saved in a same storage space by the user via simple operations.

In a fourth possible implementation of the second aspect, the generating unit is configured to: in responding to the detection of the image-obtaining operation, detect a collecting operation with respect to respective application; and in responding to detection of the collecting operation, generate the image information.

In a fifth possible implementation of the second aspect, the second obtaining unit is configured to: obtain a search keyword of the text information; search for a target article corresponding to the search keyword according to the search keyword; and obtain link information corresponding to the target article.

This technical solution has advantageous effects as follows. The user only needs to take a screenshot of a part of the electronic article where he/she is interested in, the terminal device may then recognize text information from the screenshot, search for a target article including the text information through a search engine by using the text information as a search keyword, and further obtain link information of the target article from the search engine. Therefore, link information corresponding to target articles from different applications may be saved in a same storage space by the user via simple operations.

In a sixth possible implementation of the second aspect, the bookmark index includes at least one first-level index item, each first-level index item indicates a distinct category; and the at least one first-level index item includes at least one second-level index item indicating a corresponding category.

This technical solution has advantageous effects as follows. By classifying the target articles, when the user looks over one of the collected electronic articles, link information corresponding to the electronic article may be searched out quickly according to a category of the electronic article, thus improving the speed and convenience of searching for an electronic article.

According to a third aspect of the present invention, there is provided a non-transitory storage medium. When instructions stored in the non-transitory storage medium is running on a processor of a mobile terminal, the mobile terminal is caused to perform acts comprising: obtaining bookmarks from a plurality of applications; generating bookmark index with respect to respective application according to the bookmarks; when a collection checking operation is detected, displaying the bookmark indexes; and when a checking operation of a bookmark index is detected, displaying the bookmark corresponding to the bookmark index.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for processing bookmarks according to an example embodiment.
Fig. 2 is a flow chart showing a process of obtaining bookmarks with respect to respective application according to an example embodiment.
Fig. 3 is schematic diagram illustrating a process of taking a screenshot in the embodiment described with reference to Fig. 2.
Fig. 4 is a flow chart showing a process of generating image information indicated by an image-obtaining operation in responding to detection of the image-obtaining operation according to an example embodiment.
Fig. 5 is schematic diagram illustrating a process of taking a screenshot in the embodiment described with reference to Fig. 4.
Fig. 6 is a flow chart showing a process of generating bookmark index with respect to respective application according to the bookmarks according to an example embodiment.
Fig. 7 is schematic diagram illustrating a process of recognizing text information from a screenshot in the embodiment described with reference to Fig. 6.
Fig. 8 is a flow chart showing a process of obtaining link information corresponding to text information according to an example embodiment.
Fig. 9 is a block diagram illustrating an apparatus for processing bookmarks according to an example embodiment.
Fig. 10 is a block diagram illustrating an obtaining module 91 according to an example embodiment.
Fig. 11 is a block diagram illustrating a generating module 92 according to an example embodiment.
Fig. 12 is a block diagram illustrating a terminal device according to an example embodiment.
Fig. 13 is a block diagram illustrating another terminal device according to an example embodiment.

Embodiments of the present disclosure are clearly disclosed in above figures and will be illustrated in detail in following descriptions. The drawings and textual descriptions shouldn't be interpreted as to limit the scope of spirit of the present discloser in any way, but to illustrate concepts of the present discloser to those skilled in the art with reference to the embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the present disclosure as recited in the appended claims.

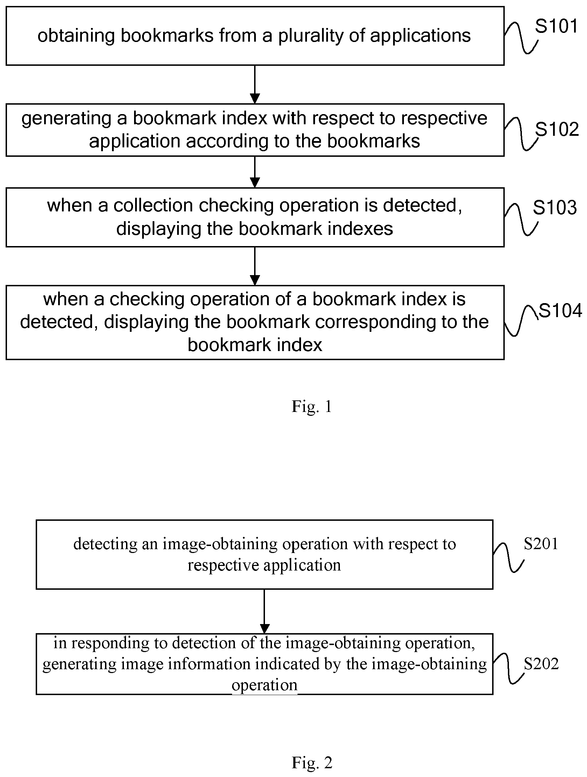

Embodiments of the present disclosure provide a method for processing bookmarks. The method may be performed by an apparatus for processing bookmarks, and the apparatus for processing bookmarks may be integrated in a terminal device, such as a mobile phone and the like. Referring to Fig. 1, Fig. 1 is a flow chart showing a method for processing bookmarks according to an example embodiment. As illustrated in Fig. 1, the method includes following acts.

At block 101, bookmarks from a plurality of applications are obtained. For example, the mobile phone may obtain bookmarks from a plurality of different applications installed on the mobile phone. The social network applications may include social network applications, new applications, e-book reading applications, etc. Additionally, the mobile phone may obtain corresponding bookmarked information from the plurality of different applications.

In this embodiment, a terminal device of a user, for example a mobile phone, may be installed with a plurality of applications, the plurality of applications may be different types of applications. The mobile phone may be a smart phone, and the applications may be configured to provide electronic articles for the user to read. For example, the mobile phone is installed with applications such as WeChat®, Twitter® and a news client, so that the user can read the electronic articles through these applications. When the user is interested in an electronic article in one of the applications, or the user does not finish reading an electronic article because of the time limit, the electronic article may be bookmarked or saved through a user interface of the application, and the application then generates corresponding bookmark according to the user's collecting operation. The terminal device may obtain the bookmark with respect to respective application. For example, the user may save the electronic article through the user interface or perform a screen-shot operation or a print-screen operation on the electronic article through the user interface to generate image information of the electronic article, therefore the bookmark may include the electronic article or the image information of the electronic article. The terminal device may obtain the electronic article with respect to respective application or obtain the image information of the electronic article with respect to respective application.

At block 102, a bookmark index with respect to respective application is generated according to the bookmarks. For example, the terminal device may generate a first bookmark index for the plurality of social network applications while the terminal may generate a second bookmark index for the plurality of News applications.

The terminal device may generate bookmark index with respect to respective application according to the bookmark with respect to respective application. For example, image recognition may be performed on image information of the electronic article to obtain text information in the image information. Then the text information or keywords of the text information may be searched to obtain link information corresponding to the text information, and the link information is included in the bookmark index. For instance, the terminal device generates bookmark indexes with respect to electronic articles in WeChat® according to the bookmarks in WeChat®, generates bookmark indexes with respect to electronic articles in Twitter® according to the bookmarks in Twitter and generates bookmark indexes with respect to electronic articles in the news client according to the bookmarks in the news client. Alternatively, the terminal may generate bookmark indexes with respect to electronic articles in respective application according to the bookmarks in respective application. The bookmark indexes with respect to the electronic articles in respective application may be formed as a list and displayed to the user.

At block 103, when a collection checking operation is detected, the bookmark indexes are displayed. For example, the collection check operation may be preset by the user in settings of the mobile device. The user may activate the collection checking operation by a preset key combination, a special voice command, etc.

When the user cannot remember which application was used for reading a certain electronic article, he/she may check the bookmark index through the user interface. When the collection checking operation is detected by the terminal device, the bookmark index is displayed. For example, the list formed by the bookmark index with respect to respective application is displayed.

At block 104, when a checking operation of a bookmark index is detected, the bookmark corresponding to the bookmark index is displayed.

The user may check every bookmark index in the list formed by the bookmark indexes, when a checking operation of a bookmark index from the user is detected by the terminal device, the corresponding bookmark is displayed.

The user may select a bookmark index corresponding to an electronic article he/she is interested in from the list formed by the bookmark indexes, or select a bookmark index corresponding to an electronic article in his/her memory from the list formed by the bookmark indexes. When a bookmark index is selected by the user from the list formed by the bookmark indexes, the terminal device may display the bookmark corresponding to the selected bookmark index according to the operation of selecting the bookmark index performed by the user. For example, when the terminal device detects a checking operation on a certain piece of link information performed by the user, the terminal device may display image information or an electronic article corresponding to the piece of link information.

One of above applications is taken as an example for schematic illustration as follows. When the user reads an electronic article through an application installed on the mobile phone, for example the news client, what a screen of the mobile phone displays is a part of the electronic article, the screen of the mobile phone may be a touch screen. For example, the electronic article may include a plurality of pages, while the screen can only display one page at a time. When the user finishes reading all or a part of the electronic article, if he/she is interested in the electronic article, he/she may perform an operation on target information displayed on the screen of the mobile phone. The target information may be a part of the electronic article, for example, one page thereof, or may be all contents of the electronic article. The operation on the target information displayed on the screen of the mobile phone performed by the user may be an operation that can trigger the mobile phone to generate image information of the target information. For instance, the operation may be a screen-shot operation or a print-screen operation, i.e. an operation to capture the screen of the mobile phone, so as to obtain a screenshot of the target information.

It should be noticed that, electronic articles the user is interested in may be located in different applications on the mobile phone, and the method in this embodiment may be used to process electronic articles the user is interested in which are located in anyone of the applications. For example, the mobile phone is installed with applications such as WeChat®, Twitter®, the news client and the like, when the user finds an interested electronic article A in the news client, link information of the electronic article A, for example URL A, is saved according to the method of the present embodiment. In like manner, when the user finds an interested electronic article B in Wechat®, link information of the electronic article B, for example URL B, is saved according to the method of the present embodiment, and so on. Link information (e.g. URL) corresponding to interested electronic articles which are found by the user in different applications may then be integrated together by the mobile phone. For example, all the link information (e.g. URL) corresponding to interested electronic articles which are found by the user in different applications may be saved locally, in a cloud or in a server, so that the user can search the link information corresponding to electronic articles he/she is interested in from a same storage space.

With this embodiment, by obtaining bookmarks from the plurality of applications, generating bookmark index with respect to respective application according to the bookmarks and displaying corresponding bookmark when a checking operation of a bookmark index is detected, link information corresponding to electronic articles from different applications can be stored uniformly, such that the user may search for the link information corresponding to electronic articles from different applications which the user is interested in from a same storage space. In this way, the user may find a collected electronic article even if he/she cannot remember the application in which the collected electronic article is located, thus improving the user experience.

Embodiments of the present disclosure further provide another method for processing bookmarks. The method is an extension and optimization of the method illustrated with reference to Fig. 1.

Fig. 2 is a flow chart showing a process of obtaining bookmark with respect to respective application according to an example embodiment. As illustrated in Fig. 2, block 101 in Fig. 1 includes following acts.

At block 201, an image-obtaining operation with respect to respective application is detected.

The image-obtaining operation may include a screen-shot operation or a print-screen operation.

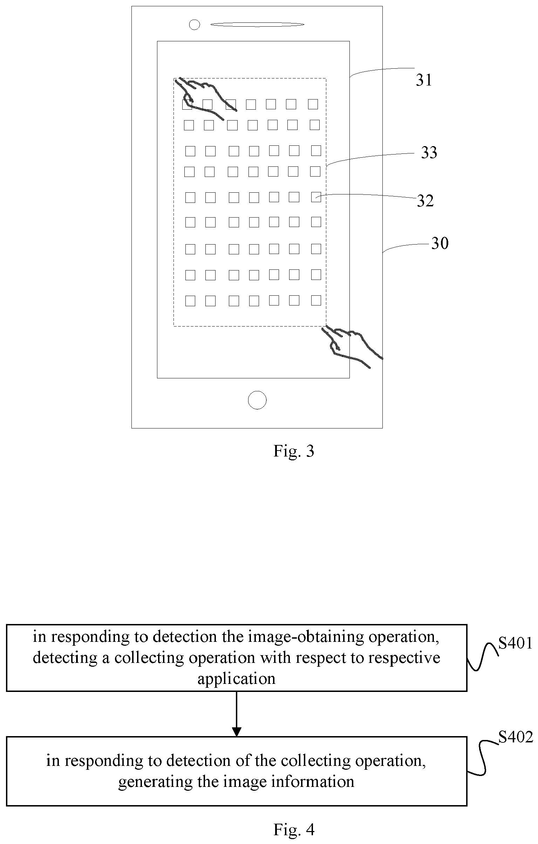

As illustrated in Fig. 3, reference sign 30 represents a mobile phone, for example a smart phone, reference sign 31 represents a touch screen of the smart phone, and reference sign 32 represents letters in a page of an electronic article from an application (e.g. the news client). If the user is interested in the electronic article, a screen-shot operation or a print-screen operation may be performed by the user on currently displayed target information (i.e. the current page of the electronic article) through the touch screen 31. For example, the user may put a finger on a top left corner of the touch screen and move the finger towards a lower right corner of the touch screen to snatch target information in a rectangular area from the top left corner to the lower right corner of the touch screen.

The operation illustrated with reference to Fig. 3 is just one possible way to perform the screen-shot operation; there is no limitation on specific manners of performing the screen-shot operation in this embodiment. In addition, the user may also obtain image information 33 as shown in Fig. 3 through a print-screen operation. The print-screen operation may be an operation performed by the user on a certain button or key of the mobile phone, or an operation performed by the user on a combination of a plurality of buttons or keys of the mobile phone, or a touching and sliding operation of fingers as illustrated in Fig.3. There is no limitation on specific manners of performing the print-screen operation in this embodiment. Moreover, the user may further operate on the target information displayed on the touch screen through other ways to trigger the mobile phone to generate the image information (e.g. screenshot) of the target information.

At block 202, in responding to detection of the image-obtaining operation, image information indicated by the image-obtaining operation is generated.

In an embodiment, the bookmark includes the image information.

In this embodiment, there are several ways to achieve generating the image information indicated by the image-obtaining operation in responding to detection of the image-obtaining operation.

In one possible way, the image-obtaining operation includes the screen-shot operation or the print-screen operation, the terminal device directly generates the image information based on the screen-shot operation or the print-screen operation, and collects the image information. As illustrated in Fig. 3, the smart phone generates the image information 33 corresponding to the target information based on the screen-shot operation or the print-screen operation performed by the user, and the image information 33 may be a screenshot of the target information within the rectangular range.

Another possible way to achieve generating the image information includes acts illustrated in Fig. 4.

At block 401, a collecting operation with respect to respective application is detected in responding to the detection of the image-obtaining operation.

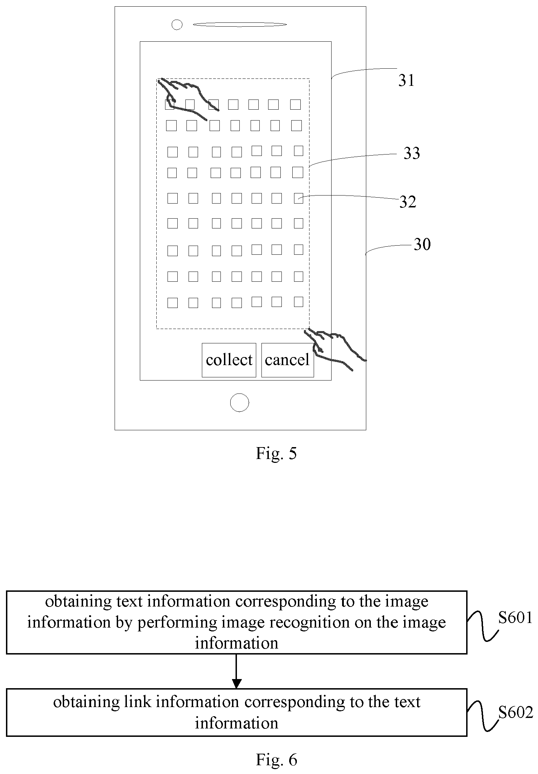

As illustrated in Fig. 5, in responding to detection of the screen-shot operation or the print-screen operation, the mobile phone may display icons such as "collect" or "cancel" for the user to choose whether to collect the screenshot or cancel the screenshot. Then the mobile phone detects if there is an operation on the "collect" or the "cancel" icon performed by the user. In one scenario, the icon "collect" may be chosen, for example, the "collect" icon is clicked.

At block 402, in responding to detection of the collecting operation, the image information is generated.

The mobile phone generates the image information 33 as shown in Fig. 3 (i.e. the screenshot) in responding to detection of the clicking operation on the "collect" icon.

With this embodiment, the user only needs to take a screenshot of a part of the electronic article where he/she is interested in, the terminal device may then recognize text information from the screenshot, search for a target article including the text information through a search engine by using the text information as a search keyword, and further get link information corresponding to the target article from the search engine. Therefore, link information corresponding to target articles from different applications may be saved in a same storage space by the user via simple operations.

Fig. 6 is a flow chart showing a process of generating bookmark index with respect to respective application according to the bookmarks according to an example embodiment. As illustrated in Fig. 6, on the basis of the embodiment described with reference to Fig. 2, the block 102 in Fig. 1 further includes following acts.

At block 601, image recognition is performed on the image information to obtain text information corresponding to the image information.

The target information being one page of the electronic article is taken as an example for schematic illustration in this embodiment. When the mobile phone obtains the image information corresponding to the target information, for example the screenshot of the current page of the electronic article displayed on the screen of the mobile phone, text information in the screenshot is recognized, i.e. the image information is converted into text information, the text information is included in the image information. There is no limitation on specific implementation of recognizing the text information from the screenshot. Since the target information is one page of the electronic article, while what the user is interested in is whole contents of the electronic article and what the user operates on the screen of the mobile phone is a part of the electronic article, the mobile phone can recognize the text information from the screenshot to obtain a target article including the text information. One possible way is to search for the target article including the text information through a search engine by using the text information as a search keyword; another possible way is to obtain key words in the text information, and then search for the target article including the text information through the search engine according to the key words. Alternatively, the target article including the text information may be obtained in other ways. The target article may be the electronic article.

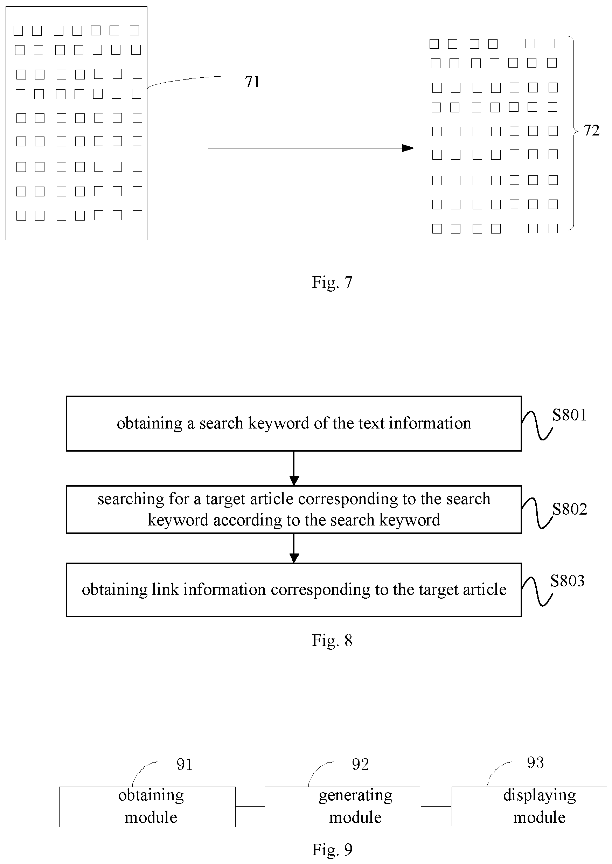

In an embodiment, the text information in the screenshot may be recognized by the mobile phone via an image recognition algorithm, i.e. the screenshot is converted into text. As illustrated in Fig. 7, reference sign 71 represents the screenshot obtained above, the screenshot 71 includes text information and the text information 72 included in the screenshot is recognized by an image recognition algorithm. Alternatively, the text information 72 may be all text information included in the screenshot 71.

At block 602, link information corresponding to the text information is obtained.

In an embodiment, the bookmark index includes the link information.

In an embodiment, the bookmark includes the image information.

When the target article including the text information is obtained by the mobile phone, for example, the target article including the text information is searched out on the search engine, link information corresponding to the target article including the text information may be further obtained from the search engine. In an embodiment, the link information may be a URL (uniform resource locator) corresponding to the target article including the text information.

The mobile phone may save the link information corresponding to the target article locally, in a cloud or in a server.

With this embodiment, the user only needs to take a screenshot of a part of the electronic article where he/she is interested in, the terminal device may then recognize text information from the screenshot, search for a target article including the text information through a search engine by using the text information as a search keyword, and further get link information corresponding to the target article from the search engine. Therefore, link information corresponding to target articles from different applications may be saved in a same storage space by the user via simple operations.

Fig. 8 is a flow chart showing a process of obtaining link information corresponding to text information according to an example embodiment. As illustrated in Fig. 8, the act of obtaining link information corresponding to text information as described at block 501 in Fig.5 includes following acts.

At block 801, a search keyword of the text information is obtained.

Comparing to above embodiments, in this embodiment, the search keyword is not the text information 72 shown in Fig. 7, but a keyword extracted from the text information 72 on the basis of Fig. 7, i.e. a keyword obtained from a segment of words. There is no limitation on specific implementations of obtaining the keyword from the text information 72.

At block 802, a target article corresponding to the search keyword is searched according to the search keyword.

Since the text information 72 comes from one page of the electronic article in someone of the applications, while what the user is interested in is whole contents of the electronic article, it is needed to obtain whole contents of the electronic article from a part of the electronic article. For example, the target article including the text information 72, i.e. the whole contents of the electronic article the user is interested in, may be searched through a search engine installed on the mobile phone using the text information 72 as the search keyword.

At block 803, link information corresponding to the target article is obtained.

When the target article including the text information is obtained by the mobile phone, for example, the target article including the text information is searched out on the search engine, link information corresponding to the target article including the text information may be further obtained from the search engine. In an embodiment, the link information may be a URL (uniform resource locator) corresponding to the target article including the text information.

The acts described in the embodiments may be used to process electronic articles the user is interested in which are located in different applications. The mobile device may obtain and store bookmarks (such as link information) corresponding to electronic articles from different applications, so that the bookmarks (such as link information) corresponding to electronic articles from different applications may be stored in a same storage space. In addition, when the storage space is great enough, the electronic articles from different applications may also be stored in the storage space. The storage space may be a local memory of the mobile phone, a storage space in a cloud corresponding to the mobile phone, or a storage space in a server. There is no limitation on specific implementations of the storage space in this embodiment. When stored in the local storage, the user may read the bookmarked article offline at any time.

Moreover, on the basis of above embodiments, the bookmark index may include at least one first-level index item, different first-level index items indicate different categories. In detail, the at least one first-level index item includes at least one second-level index item indicating a corresponding category.

When the link information corresponding to the target articles collected through the method of the present embodiment becomes too much, the link information may be classified by the terminal device, e.g. the mobile phone. For instance, the link information may be classified according to categories of the electronic articles, such as a healthy category of electronic articles, a science category of electronic articles, a social category of electronic articles, etc. Link information corresponding to electronic articles in the healthy category is put in one set, link information corresponding to electronic articles in the science category is put in one set, and link information corresponding to electronic articles in the social category is put in one set. In addition, each category may be further divided into sub-categories with less range. For example, electronic articles in the science category may be divided into electronic articles in a biology category, electronic articles in a chemistry category, and electronic articles in an Internet category, etc. Accordingly, link information corresponding to electronic articles in the science category is divided into link information corresponding to electronic articles in the biology category, link information corresponding to electronic articles in the chemistry category, and link information corresponding to electronic articles in the Internet category, etc.

When the user looks over one of the collected electronic articles, link information corresponding to the electronic article may be searched out quickly according to a category of the electronic article, thereby whole contents of the electronic article may be found according to the link information corresponding to the electronic article.

With this embodiment, by classifying the target articles, when the user looks over one of the collected electronic articles, link information corresponding to the electronic article may be searched out quickly according to a category of the electronic article, thus increasing the speed and convenience of searching for an electronic article by the user.

Fig. 9 is a block diagram illustrating an apparatus for processing bookmarks according to an example embodiment. As illustrated in Fig. 9, the apparatus includes an obtaining module 91, a generating module 92, and a displaying module 93.

The obtaining module 91 is configured to obtain bookmarks from a plurality of applications.

The generating module 92 is configured to generate bookmark index with respect to respective application according to the bookmarks.

The displaying module 93 is configured to, when a collection checking operation is detected, display the bookmark indexes; and when a checking operation of a bookmark index is detected, display the bookmark corresponding the bookmark index.

The apparatus for processing bookmarks provided in this embodiment may be used for implementing technical solutions described in above method embodiments with reference to Fig.1.

With this embodiment, by obtaining bookmarks from the plurality of applications, generating bookmark index with respect to respective application according to the bookmarks and displaying a corresponding bookmark when a checking operation of a bookmark index is detected, link information corresponding to electronic articles from different applications can be stored uniformly, such that the user may search for the link information corresponding to electronic articles which the user is interested in from a same storage space. In this way, the user may find a collected electronic article even if he/she cannot remember the application in which the collected electronic article is located, thus improving the user experience.

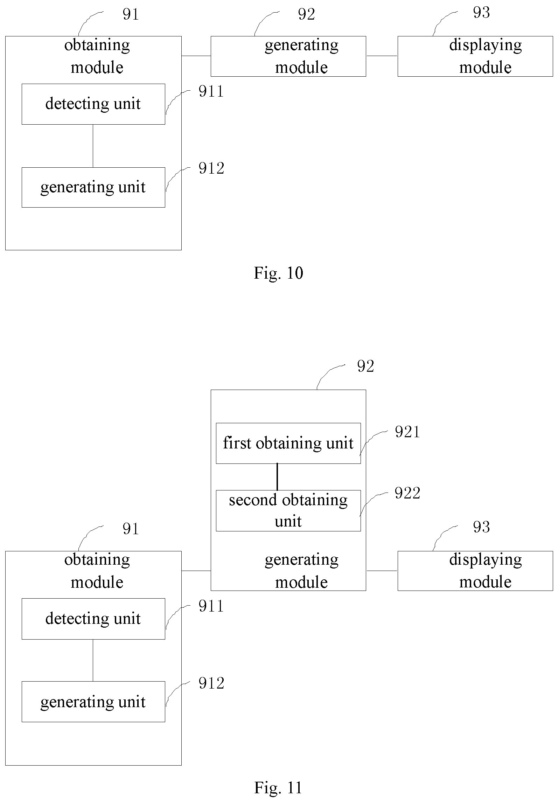

Fig. 10 is a block diagram illustrating the obtaining module 91 according to an example embodiment. As illustrated in Fig. 10, on the basis of embodiments described with reference to Fig. 9, the obtaining module 91 includes a detecting unit 911 and a generating unit 912. The detecting unit 911 is configured to detect an image-obtaining operation with respect to respective application. The generating unit 912 is configured to, in responding to detection of the image-obtaining operation, generate image information indicated by the image-obtaining operation, in which the bookmark includes the image information.

The apparatus for processing bookmarks provided in this embodiment may be used for implementing technical solutions described in above method embodiments with reference to Fig.2.

With this embodiment, the user only needs to take a screenshot of a part of the electronic article where he/she is interested in, the terminal device may then recognize text information from the screenshot, search for a target article including the text information through a search engine by using the text information as a search keyword, and further get link information corresponding to the target article from the search engine. Therefore, link information corresponding to target articles from different applications may be saved in a same storage space by the user via simple operations.

Fig. 11 is a block diagram illustrating the generating module 92 according to an example embodiment. As illustrated in Fig. 11, on the basis of embodiments described with reference to Fig. 10, the generating module 92 includes a first obtaining unit 921 and a second obtaining unit 922. The first obtaining unit 921 is configured to obtain text information corresponding to the image information by performing image recognition on the image information. The second obtaining unit 922 is configured to obtain link information corresponding to the text information, in which the bookmark index includes the link information.

The image-obtaining operation may include a screen-shot operation or a print-screen operation.

The generating unit 912 is configured to, in responding to the detection of the image-obtaining operation, detect a collecting operation with respect to respective application; and in responding to detection of the collecting operation, generate the image information.

The second obtaining unit 922 is configured to obtain a search keyword corresponding to the text information; search for a target article corresponding to the search keyword according to the search keyword; and obtain link information corresponding to the target article.

Alternatively, the bookmark index may include at least one first-level index item, each first-level index item indicates a distinct category. In detail, the at least one first-level index item includes at least one second-level index item indicating a corresponding category.

The apparatus for processing bookmarks provided in this embodiment may be used for implementing technical solutions described in above method embodiments with reference to Fig. 6 and Fig. 8.

With this embodiment, by classifying the target articles, when the user looks over one of the collected electronic articles, link information corresponding to the electronic article may be searched out quickly according to a category of the electronic article, thus increasing the speed and convenience of searching for an electronic article by the user.

With respect to the apparatus for processing bookmarks in the above embodiments, the specific manners for performing operations for individual modules and sub-modules therein have been described in detail in the embodiments regarding the methods, which will not be elaborated herein.

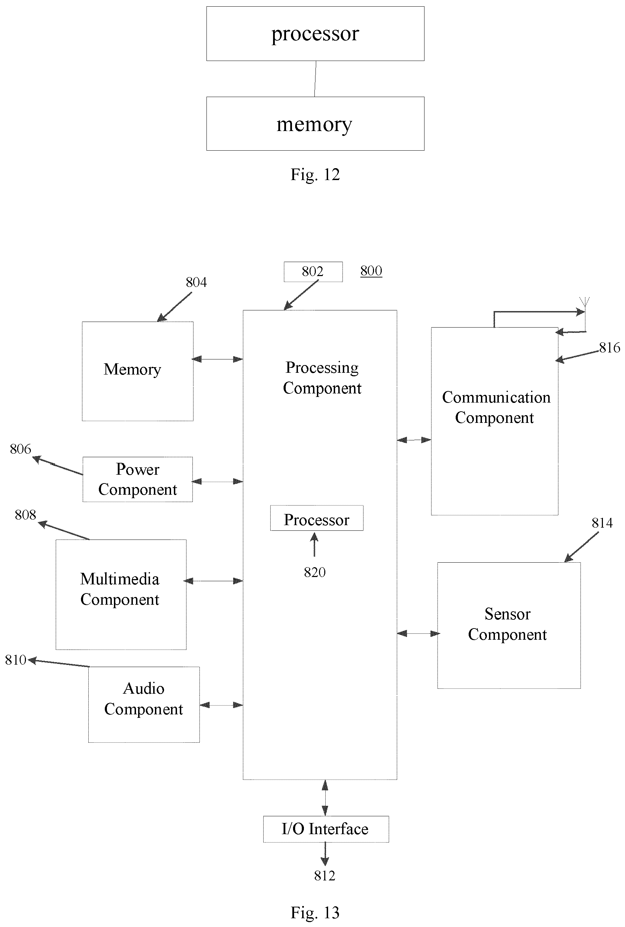

Functions and a structure of the apparatus for processing bookmarks have been illustrated above, referring to Fig. 12, in practice, the apparatus for processing bookmarks may be achieved as a terminal device, the terminal device includes: a processor; a memory, configured to store instructions executable by the processor. The processor is configured to perform acts of: obtaining bookmarks from a plurality of applications; generating bookmark index with respect to respective application according to the bookmarks; when a collection checking operation is detected, displaying the bookmark indexes; and when a checking operation of a bookmark index is detected, displaying the bookmark corresponding the bookmark index.

With this embodiment, by obtaining bookmarks from the plurality of applications, generating bookmark index with respect to respective application according to the bookmarks and displaying a corresponding bookmark when a checking operation of a bookmark index is detected, link information corresponding to electronic articles from different applications can be stored uniformly, such that the user may search for the link information corresponding to electronic articles which the user is interested from a same storage space. In this way, the user may find a collected electronic article even if he/she cannot remember the application in which the collected electronic article is located, thus improving the user experience.

Fig. 13 is a block diagram illustrating another terminal device according to an example embodiment. For example, terminal device 800 may be a mobile phone, a computer, a digital broadcast terminal, a messaging device, a gaming console, a tablet, a medical device, an exercise equipment, a personal digital assistant, and the like.

Referring to Fig. 13, terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phone book data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WIFI, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 804 including instructions, the above instructions are executable by the processor 820 in the terminal device 800, for performing the above-described methods. For example, the non-transitory computer-readable storage medium may be a ROM, a RAM, a CD-ROM, a magnetic tape, a floppy disc, an optical data storage device, and the like.

The present disclosure further provides a computer readable non-volatile storage medium, when instructions stored in the storage medium is running on a processor of a mobile terminal, the mobile terminal is caused to perform a method for processing bookmarks, the method includes: obtaining bookmarks from a plurality of applications; generating bookmark index with respect to respective application according to the bookmarks; when a collection checking operation is detected, displaying the bookmark indexes; and when a checking operation of a bookmark index is detected, displaying the bookmark corresponding the bookmark index.

Other embodiments of the present disclosure will be apparent to those skilled in the art from consideration of the specification and practice of the present disclosure. This application is intended to cover any variations, uses, or adaptations of the invention following the general principles thereof and including such departures from the present disclosure as come within known or customary practice in the art. It is intended that the specification and examples be considered as exemplary only, with a scope of the invention being indicated by the following claims.

## Claims

1. A method for processing bookmarks, comprising:
obtaining (S101) bookmarks from a plurality of applications;
generating (S102) a bookmark index with respect to respective application according to the bookmarks;
when a collection checking operation is detected, displaying (SI03) the bookmark indexes; and
when a checking operation of a bookmark index is detected, displaying (SI04) the bookmark corresponding to the bookmark index.

2. The method according to claim 1, wherein obtaining (S101) bookmarks from the plurality of applications comprises:
detecting (S201) an image-obtaining operation with respect to respective application; and
in responding to detection of the image-obtaining operation, generating (S202) image information indicated by the image-obtaining operation;
wherein at least one of the bookmarks comprises the image information.

3. The method according to claim 1 or 2, wherein generating (SI02) the bookmark index with respect to respective application according to the bookmarks comprises:
obtaining (S601) text information corresponding to the image information by performing image recognition on the image information; and
obtaining (S602) link information corresponding to the text information;
wherein the bookmark index comprises the link information.

4. The method according to claim 2 or 3, wherein the image-obtaining operation comprises a screen-shot operation or a print-screen operation.

5. The method according to any one of claims 2 to 4, wherein in responding to detection of the image-obtaining operation, generating (S202) image information indicated by the image-obtaining operation comprises:
in responding to the detection the image-obtaining operation, detecting (S401) a collecting operation with respect to respective application; and
in responding to detection of the collecting operation, generating (S402) the image information.

6. The method according to any one of claims 3 to 5, wherein obtaining (S602) link information corresponding to the text information comprises:
obtaining (S801) a search keyword of the text information;
searching (S802) for a target article corresponding to the search keyword according to the search keyword; and
obtaining (S803) link information corresponding to the target article.

7. The method according to any one of the preceding claims, wherein the bookmark index comprises at least one first-level index item, each first-level index item indicates a distinct category; and
the at least one first-level index item comprises at least one second-level index item indicating a corresponding category.

8. An apparatus for processing bookmarks, comprising:
an obtaining module (91), configured to obtain bookmarks from a plurality of applications;
a generating module (92), configured to generate a bookmark index with respect to respective application according to the bookmarks; and
a displaying module (93), configured to, when a collection checking operation is detected, display the bookmark indexes; and when a checking operation of a bookmark index is detected, display the bookmark corresponding to the bookmark index.

9. The apparatus according to claim 8, wherein the obtaining module (91) comprises:
a detecting unit (911), configured to detect an image-obtaining operation with respect to respective application; and
a generating unit (912), configured to, in responding to detection of the image-obtaining operation, generate image information indicated by the image-obtaining operation;
wherein at least one of the bookmarks comprises the image information.

10. The apparatus according to claim 8 or 9, wherein, the generating module (92) comprises:
a first obtaining unit (921), configured to obtain text information corresponding to the image information by performing image recognition on the image information; and
a second obtaining unit (922), configured to obtain link information corresponding to the text information;
wherein the bookmark index comprises the link information.

11. The apparatus according to claim 9 or 10, wherein the image-obtaining operation comprises a screen-shot operation or a print-screen operation.

12. The apparatus according to any one of claims 8 to 11, wherein the generating unit (912) is configured to:
in responding to the detection of the image-obtaining operation, detect a collecting operation with respect to respective application; and
in responding to detection of the collecting operation, generate the image information.

13. The apparatus according to any one of claims 10 to 12, wherein the second obtaining unit (922) is configured to:
obtain a search keyword of the text information;
search for a target article corresponding to the search keyword according to the search keyword; and
obtain link information corresponding to the target article.

14. The apparatus according to any one of claims 8 to 13, wherein the bookmark index comprises at least one first-level index item, each first-level index item indicates a distinct category; and
the at least one first-level index item comprises at least one second-level index item indicating a corresponding category.

15. A non-transitory storage medium, wherein when instructions stored in the non-transitory storage medium is running on a processor of a mobile terminal, the mobile terminal is caused to perform acts comprising:
obtaining bookmarks from a plurality of applications;
generating bookmark index with respect to respective application according to the bookmarks;
when a collection checking operation is detected, displaying the bookmark indexes; and
when a checking operation of a bookmark index is detected, displaying the bookmark corresponding to the bookmark index.
